# EUROPÄISCHE PATENTANMELDUNG

(11) **EP 4 621 398 A1**
(43) Veröffentlichungstag der Anmeldung: **24.09.2025**
(21) Anmeldenummer: 25164386.2
(22) Anmeldetag: 18.03.2025
(51) Int. Cl.: G01N 25/72, G01J 5/48, G01J 5/00

(54) **SCHNELLES FOTOTHERMISCHES SCANVERFAHREN UND SYSTEM HIERZU**

(30) Priorität: 18.03.2024 DE 102024107698
(71) Anmelder: OptiSense Gesellschaft für Optische Prozessmesstechnik mbH & Co. KG, 45721 Haltern am See (DE)
(72) Erfinder: Gaußmann, Fabian, 40627 Düsseldorf (DE); Nelke, Georg, 45721 Haltern am See (DE)
(74) Vertreter: Andrejewski - Honke Patent- und Rechtsanwälte Partnerschaft mbB

(57) **Zusammenfassung**

Bei einem fotothermischen Messverfahren umfasst ein fotothermisches Messgerät (1, 6, 16) einen Sensor (1) zur Erfassung von Wärmestrahlung, wobei der Sensor (1) ein Sensorelement (2) mit einer Mehrzahl von Pixeln (2a, 2b, 2c, 2d) aufweist. Wenigstens zwei der Pixel (2a, 2b, 2c, 2d) bilden eine Pixelzeile (3) des Sensorelementes (2), wobei eine Probe (4) auf dem Sensorelement (2) auf der Probe (4) abgebildet und ein Blickfeld (5) des Sensorelements (2) einer Oberfläche der Probe (4) definiert wird. Einem ersten Pixel (2a) der Pixelzeile (3) ist ein erster Blickfeldbereich (5a) auf der Probe (4) und einem zweiten Pixel (2b) ist ein zweiter Blickfeldbereich (5b) auf der Probe (4) zugeordnet. Ein Heizelement (6) erzeugt ein Wärmefeld (7) auf der Probe (4) und erwärmt wenigstens eine Probenstelle (8) bzw. eine Probenfläche der Probe (4). Die erwärmte Probenstelle (8) wird relativ zum und durch das Blickfeld (5) bzw. durch den ersten. Blickfeldbereich (5a) und dann relativ durch den zweiten Blickfeldbereich (5b) bewegt. Der erste Pixel (2a) wird ausgelesen und liefert erste Lesedaten (L1) der erwärmten Probestelle (8) aus dem ersten Blickfeldbereich (5a). Der zweite Pixel (2b) wird ausgelesen und liefert zweite Lesedaten (L2) der erwärmten Probenstelle (8) aus dem zweiten Blickfeldbereich (5), wobei der zweite Pixel (2b) nach dem ersten Pixel (2a) ausgelesen wird.

## Beschreibung

Die Erfindung betrifft ein fotothermisches Messverfahren gemäß dem Oberbegriff des Anspruchs 1. Die Erfindung betrifft ferner ein fotothermisches System gemäß dem Oberbegriff des Anspruchs 10.

Ein derartiges Messverfahren ist aus CN 103234953 A bekannt, wonach ein Heizelement in Form eines Lasers zur Erwärmung der Probe genutzt wird. Die Strahlgänge des Lichtstrahls auf die Probe einerseits und die von der Probe emittierte Wärmestrahlung andererseits sind voneinander entkoppelt. Der Lichtstrahl des Lasers wird mit Hilfe entsprechender Optiken länglich geformt und dann mittels eines Galvospiegels gegenüber der Probe abgelenkt bzw. bewegt. Dabei ist die längliche Ausdehnung des Lichtstrahls quer zur Bewegungsrichtung ausgerichtet, so dass in kurzer Zeit eine große Fläche der Probe thermisch angeregt wird. Der Sensor umfasst eine Infrarot-Pixelmatrix sowie eine Linse, die die thermische Strahlung der Probe auf der Pixelmatrix abbildet. Somit dient der Sensor aus CN 103234953 A als Wärmebildkamera, deren Blickfeld allerdings nicht mit dem Lichtstrahl mitbewegt wird. Stattdessen bewegt sich der Lichtstrahl innerhalb des Blickfelds und relativ zum Blickfeld. Die Linse des Sensors bildet dabei jeden Pixel auf der Probe ab, so dass jedem Pixel ein Blickfeldbereich des Blickfelds zugeordnet wird.

In CN 103234953 A wird empfohlen, statt Blitzlichtlampen einen Laser als Wärmequelle zu verwenden. Dies erlaubt schnell aufeinander folgende Anregungslichtpulse mit einer bestimmten Pulsfrequenz an einer Probenstelle. Während dieser Abfolge von Lichtpulsen werden mit dem Sensor Wärmebilder in einer bestimmten Bildfrequenz aufgenommen. Die Bildfrequenz ist geringfügig größer als die Pulsfrequenz, so dass mit jedem weiteren Bild - die Gleichförmigkeit der Lichtpulse vorausgesetzt - jeweils eine weitere Temperatur innerhalb eines sich wiederholenden, abkühlenden Temperaturverlaufs T(t) auf einer einzigen Probenstelle ermittelt wird. Auf diese Weise wird die Scangeschwindigkeit gegenüber dem Stand der Technik vergrößert.

Ein weiteres, scannendes fotothermisches Verfahren ist aus DE 698 28 873 T2 bekannt. Der Sensor ist demnach ein Bestandteil eines Messkopfes, welcher neben dem Sensor auch ein Heizelement in Form eines Lasers umfasst. Der Messkopf weist motorgesteuerte Schwenkspiegel auf, mit denen der Laserstrahl gegenüber der fixierten Probe verfahren wird. Die motorgesteuerten Schwenkspiegel dienen außerdem dazu, die durch den Laserstrahl erzeugte und von der Probe emittierte Wärmestrahlung einzufangen. Mittels einer entsprechenden Linse wird die Wärmestrahlung auf dem Sensor fokussiert. Der Sensor umfasst eine Pixelmatrix aus Pixeln und damit eine Vielzahl an in Bewegungsrichtung angeordneten Pixelzeilen nebeneinander. Ebenso umfasst der Sensor eine Vielzahl an Pixelreihen nebeneinander, welche quer zu den Pixelzeilen angeordnet sind. Die Linse bildet letztlich die von der Probe ausgehende Wärmestrahlung als zweidimensionales Bild auf der Matrix des Sensors ab, so dass der Auftreffpunkt des Laserstrahls auf der Probenoberfläche einem Bereich auf der Pixelmatrix entspricht und der Sensor bzw. die Pixelmatrix als Wärmebildkamera fungiert.

Aufgrund der relativen Bewegung zwischen der Probe und dem Laserstrahl sowie aufgrund der zeitlich verzögerten Entwicklung der emittierten Wärmestrahlung fallen jedoch der Auftreffpunkt des Laserstrahls bzw. Heizbereich bzw. Wärmebereich sowie der Punkt mit der größten thermischen Emission bzw. der Erfassungsbereich auseinander und bilden zwischen sich eine Distanz d (häufig auch "Offset" genannt), wie sie in Figur 1 von DE 698 28 873 T2 gezeigt ist. Die Distanz d hängt u.a. von der Probe selbst, aber vor allem auch von der Verfahrgeschwindigkeit des Lichtstrahls ab, so dass die Distanz d von Messung zu Messung variieren kann. In DE 698 28 873 T2 wird daher vorgeschlagen, dass je nach Offset unterschiedliche Pixel bzw. Pixelreihen zur Messung heranzuziehen. Folglich wird anstelle der optischen Justage zum Ausgleich des Offsets von Messung zu Messung der Ausgleich elektronisch mittels Auswahl des relevanten Pixelbereichs der Pixelmatrix vorgenommen. Letztlich wird die große Fläche der Pixelmatrix dazu benutzt, um eine große Redundanz an Pixeln bereit zu stellen und die Messung nicht optisch, sondern elektronisch zu kalibrieren. Dies erlaubt grundsätzlich noch größere Scangeschwindigkeiten im Vergleich zum Scanverfahren aus CN 103234953 A. Es wurde allerdings gefunden, dass das Signal-Rausch-Verhältnis eines Scanverfahrens gemäß DE 698 28 873 T2 noch verbesserungswürdig ist.

Allerdings ist die Scangeschwindigkeit des Stands der Technik für zahlreiche Anwendungen noch immer verbesserungswürdig. Der Erfindung liegt daher die Aufgabe zugrunde, die Scangeschwindigkeit - bei einem guten Signal-Rausch-Verhältnis - weiter zu erhöhen.

Diese Aufgabe wird gelöst durch ein fotothermisches Messverfahren gemäß dem Anspruch 1.

Der Erfindung liegt die Erkenntnis zugrunde, dass die Erfassung gemäß CN 103234953 A von mehreren Temperaturen eines Temperaturverlaufs T(t) über mehrere Lichtpulse an einer Probenstelle dazu führt, dass der Lichtstrahl für diese mehreren Lichtpulse an einer Probenstelle verharren muss, bevor er zur nächsten Probenstelle bewegt werden kann. Dies erzwingt ein schrittweises Bewegen der Probe relativ zum Lichtstrahl, wodurch kontinuierliche Bewegungen und damit die viel schnelleren Bewegungen - und folglich auch entsprechend große Scangeschwindigkeiten - ausgeschlossen werden.

Es wurde gefunden, dass ein kontinuierliches Bewegen gemäß DE 698 28 873 T2 und ein kontinuierliches Erfassen des Maximums der thermischen Emission über eine präzise elektronische Kalibrierung zwar Vorteile bringt und insbesondere hohe Scangeschwindigkeiten ermöglicht. Allerdings wird lediglich das Maximum der thermischen Emission im sogenannten Erfassungsbereich ausgewertet, so dass pro erwärmter Probenstelle lediglich ein Pixel ausgewertet wird. Dies resultiert in dem erwähnten, verbesserungswürdigen Signal-Rausch-Verhältnis.

Der Erfindung liegt insbesondere die Erkenntnis zugrunde, dass die Merkmale des kennzeichnenden Teils dazu führen, dass eine Pixelzeile in ihrer gesamten Länge zur Bestimmung der Schichtdicken der erwärmten Probenstellen heran gezogen werden kann. Umfasst eine Pixelzeile beispielsweise 16 Pixel, so fallen je erwärmter Probenstelle 16 Messwerte aus 16 nacheinander aufgenommen Bildern bzw. Lesedaten an, wobei der jeweils relevante Pixel synchron mit der erwärmten Probenstelle durch die 16 Bilder wandert und - im Falle der Erwärmung vor dem Blickfeld - kontinuierlich geringere Temperaturen darstellt. Hierdurch fallen entsprechend mehr Messpunkte je erwärmter Probenstelle an, so dass eine hohe Auflösung bzw. Abtastung des Temperaturverlaufs T(t) erzielt und das Signal-Rausch-Verhältnis deutlich verbessert wird. Damit können aufgrund der möglichen, kontinuierlichen relativen Bewegung problemlos hohe Durchsätze, beispielsweise 100mm/s für beschichtete Metallbänder, erzielt werden. Sogar Geschwindigkeiten kontinuierlich laufender Bandware mit bis zu 500mm/s sind im Extremfall möglich. Im Ergebnis wurde die eingangs genannte Aufgabe gelöst. Insbesondere ist es mit dem erfindungsgemäßen Verfahren möglich, kontinuierlich und damit gleichmäßig über längere Zeiträume fotothermische Messungen durchzuführen.

Der Begriff "Sensorelement" kann ein Halbleiterbauelement mit einer Vielzahl an Pixeln im Mikrometer-Bereich meinen. Das Sensorelement kann gemäß einer Ausführungsform baulich vollständig voneinander getrennte Pixel umfassen. Die einzelnen Pixel können jeweils in einem eigenen Gehäuse angeordnet sein. Die Pixel können einen anderen Aufbau als Halbleiterbauelemente aufweisen.

Der Ausdruck "Heizelement" meint zweckmäßigerweise jegliches Element, welches Wärmeenergie an eine Probe abgeben kann, worunter beispielsweise elektrische Heizelemente, insbesondere Widerstandselemente, fallen. Das Heizelement umfasst vorzugsweise eine Lichtquelle. Die Lichtquelle kann ein thermischer Strahler wie eine Glühbirne oder eine Blitzlichtlampe sein. Die Lichtquelle ist vorzugsweise ein nicht thermischer Strahler sein und insbesondere eine Leuchtdiode und/oder einen Laser umfassen. Das Heizelement kann gemäß einer Ausführungsform eine Düse für heiße Fluide sein, welche beispielsweise heiße Luft über die Probe strömen lässt. Es ist möglich, dass das Heizelement ein Brenner oder ein Induktionsofen ist.

Der Begriff "Wärmefeld" meint vorzugsweise eine relativ zum Heizelement unbewegliche Fläche auf bzw. direkt auf der Probe, in welcher die Probe erwärmt wird. Das Wärmefeld kann beispielsweise durch eine elektrische Heizmatte, einen Bereich strömender, heißer Luft, Anregungslichtquellen, einen Induktionsofen etc. aufgespannt sein.

Der Ausdruck "relative Bewegung der Probe" meint vorzugsweise, dass sich die Probe bewegt, während das Heizelement bzw. das Wärmefeld bzw. der Sensor wenigstens zeitweise unbeweglich sind. Gemäß einer Ausführungsform ist die relative Bewegung der Probe dadurch gekennzeichnet, dass die Probe unbeweglich ist, während sich das Heizelement bzw. der Sensor bewegt/bewegen.

Der Ausdruck "erwärmte Probenstelle" kann einen einzigen Punkt meinen. Die erwärmte Probenstelle ist zweckmäßigerweise Bestandteil einer erwärmten Probenfläche der Probe. Vorzugsweise ist jede Probenstelle bzw. erwärmte Probenstelle lokalisierbar, sodass bei Kenntnis der Geschwindigkeit bzw. der Bewegung der Probe zugleich auch zukünftige Positionen bzw. relative Positionen der erwärmten Probenstelle bestimmbar sind.

Es ist bevorzugt, dass der Sensor eine Sensoroptik aufweist. Die Sensoroptik umfasst vorzugsweise eine Linse bzw. ein Linsensystem. Die Sensoroptik bzw. die Linse bzw. das Linsensystem ist mit Vorteil ausgebildet, einen Bereich der Probe bzw. eine Oberfläche der Probe auf dem Sensorelement abzubilden. Mit Vorteil umfasst die Sensoroptik ein Filter. Das Filter ist bevorzugt so ausgebildet, dass es von der Lichtquelle emittiertes Licht wenigstens teilweise herausfiltert bzw. absorbiert bzw. reflektiert bzw. streut. Die Sensoroptik mag so ausgebildet sein, dass das Sensorelement auf der Probe abgebildet wird und dort das Blickfeld bildet. Die Sensoroptik mag so ausgebildet sein, dass die Probe auf dem Sensorelement abgebildet wird und dort ein Probenbild vorliegt.

Es ist sehr vorteilhaft, dass eine weitere erwärmte Probenstelle nach der erwärmten Probenstelle den ersten Blickfeldbereich erreicht, wobei der erste Pixel ausgelesen wird und weitere Lesedaten der weiteren erwärmten Probenstelle aus dem ersten Blickfeldbereich liefert, wobei die weiteren Lesedaten nach den ersten Lesedaten ausgelesen werden, wobei die weiteren Lesedaten der weiteren erwärmten Probenstelle vorzugsweise gemeinsam - insbesondere innerhalb eines gemeinsamen Frames bzw. Bilds bzw. ausgelesenen Datensatzes - mit den zweiten Lesedaten der erwärmten Probenstelle ausgelesen werden. Hierdurch wird erreicht, dass der erste und zweite Pixel parallel genutzt werden, so dass die Temperaturverläufe der erwärmten Probenstelle sowie der weiteren erwärmten Probenstelle um einen Pixel zeitversetzt, aber parallel erfasst werden. Dies erlaubt die Nutzung bzw. fotothermische Auswertung jedes einzelnen Pixels von jedem ausgelesenen Datensatz bzw. Bild bzw. Frame des Sensorelements. Im Ergebnis wird die fotothermische Messung sehr schnell, was eine kontinuierliche fotothermische Messung erlaubt. Es ist hiermit insbesondere möglich, Lackschichtdicken von beispielsweise 100m langen Metallbändern bei einer relativen Geschwindigkeit von - zum Beispiel - 100mm/s zu vermessen, wobei räumliche Auflösungen in Bewegungsrichtung von beispielsweise 10mm möglich sind.

Besonders vorzugsweise ist zu einem bestimmten Zeitpunkt jeder Pixel der Pixelzeile des Sensorelements einer jeweils anderen erwärmten Probenstelle bzw. einem jeweils anderen Temperaturverlauf zuordenbar. Vorzugsweise entspricht eine Zahl von parallel vermessenen erwärmten und in Bewegungsrichtung hintereinander liegenden Probenstellen der Zahl der Pixel der Pixelzeile. Hierdurch lässt sich die Zahl der parallelen Messungen von Probenstellen lässt mit der Zahl der Pixel der Pixelzeile skalieren.

Gemäß einer besonders bevorzugten Ausführungsform ist die Pixelzeile Bestandteil einer Pixelmatrix des Sensorelementes. Es ist bevorzugt, dass jeder Pixel ein Bolometer, insbesondere ein Mikro-Bolometer, umfasst. Die Pixelmatrix bzw. das Sensorelement ist vorzugsweise ein Halbleiterbauelement. Mit Vorteil umfasst das Sensorelement bzw. die Pixelmatrix eine Mehrzahl an Pixelspalten. Zweckmäßigerweise ist jeder Pixel einer Pixelspalte und einer Pixelzeile zugeordnet. Es ist bevorzugt, dass die Pixelspalten auf der Probe im Blickfeld abgebildet werden. Zweckmäßigerweise werden wenigstens mehrere bevorzugt alle Pixel einer Pixelspalte auf jeweils einem Blickfeldbereich der Probe abgebildet. Es ist bevorzugt, dass die Pixelspalten in einer Draufsicht auf die Probe quer zur Bewegungsrichtung, insbesondere senkrecht zur Bewegungsrichtung, ausgerichtet sind. Es bevorzugt, dass mindestens zwei bzw. drei bzw. vier Pixelspalten und/oder Pixelzeilen nebeneinander angeordnet sind. Es ist bevorzugt, dass eine der Probe zugewandten Fläche der Pixelmatrix bzw. des Sensorelements rechteckig ausgebildet ist. Mit Vorteil ist eine lange Seite der rechteckigen Fläche der Pixelmatrix in der Querrichtung angeordnet. Mit Vorteil ist eine kurze Seite der rechteckigen Fläche der Pixelmatrix der Bewegungsrichtung zugeordnet bzw. parallel zu der Bewegungsrichtung verlaufend. Das Vorsehen einer Pixelmatrix ermöglicht es, neben der Erfassung des Temperaturverlaufs einer erwärmten Probenstelle eine Vielzahl an Temperaturverläufen von in Querrichtung nebeneinander liegenden Probenstellen zu erfassen. Hierdurch kann beispielsweise die gesamte Breite eines durchlaufenden Bandes einer Probe gescannt werden.

Gemäß einer Ausführungsform wird die Probe gegenüber dem Blickfeld verfahren. Vorzugsweise wird das Blickfeld - insbesondere während einer/der Betriebszeit - nicht bewegt. Der Ausdruck "nicht bewegt" meint vorzugsweise einen Stillstand des Blickfelds gegenüber der Umgebung und insbesondere gegenüber einem Fußboden. Dies ermöglicht die Vermessung bzw. das Scannen von sehr langen Proben, da die Sensorführung sonst zu aufwendig wäre. Sehr lange Proben werden häufig ohnehin maschinell verfahren, sodass die relative Bewegung bereits vorliegt und der Sensor bzw. die Wärmequelle als starr ausgebildete Elemente installiert werden können. Es ist sehr bevorzugt, dass der erste Pixel und/oder der zweite Pixel mehrfach innerhalb einer Betriebszeit von wenigstens 0,1 bzw. 0,2 bzw. 0,5 bzw. 1 bzw. 5 bzw. 10 Sekunden ausgelesen wird. Zweckmäßigerweise liegt innerhalb der Betriebszeit eine relative Bewegungsgeschwindigkeit der Probe zum Wärmefeld bzw. zum Blickfeld ständig über 0 bzw. 5 bzw. 10 bzw. 15 bzw. 20 bzw. 25 bzw. 30 mm/s. Es ist zweckmäßig, dass eine relative Bewegungsgeschwindigkeit der Probe relativ zum Wärmefeld bzw. zum Blickfeld ständig unter 2000 bzw. 1500 bzw. 1000 bzw. 500 bzw. 200 mm/s liegt.

Gemäß einer Ausführungsform wird das Blickfeld gegenüber der Probe verfahren. Vorzugsweise wird die Probe - insbesondere während einer/der Betriebszeit - nicht bewegt. Der Ausdruck "nicht bewegt" meint vorzugsweise einen Stillstand der Probe gegenüber der Umgebung und insbesondere gegenüber einem Fußboden. Dies ermöglicht die Vermessung von ausgedehnten Proben, für die allerdings keine Transporteinrichtung vorgesehen ist. Es ist sehr bevorzugt, dass der erste Pixel und/oder der zweite Pixel mehrfach innerhalb einer Betriebszeit von wenigstens 0,1 bzw. 1 bzw. 10 bzw. 100 Sekunden ausgelesen wird. Zweckmäßigerweise liegt innerhalb der Betriebszeit eine relative Bewegungsgeschwindigkeit der Probe zum Wärmefeld bzw. zum Blickfeld ständig über 0 bzw. 5 bzw. 10 bzw. 15 bzw. 20 bzw. 25 bzw. 30 mm/s. Es ist zweckmäßig, dass eine relative Bewegungsgeschwindigkeit der Probe relativ zum Wärmefeld bzw. zum Blickfeld ständig unter 2000 bzw. 1500 bzw. 1000 bzw. 500 bzw. 200 mm/s liegt.

Gemäß einer sehr bevorzugten Ausführungsform umfasst das Heizelement eine Lichtquelle. Dies bewirkt eine besonders gut einstellbare und steuerbare bzw. regelbare Erwärmung der Probe. Insbesondere gegenüber reinen Wärmestrahlern wie etwa elektrischen Heizmatten oder gegenüber beheizten Fluiden mit heißer Luft kann der Aufbau des Heizelementes sehr kompakt gehalten werden und bedeutet insgesamt einen geringen Eingriff in eine bereits existierende Anlage. Mit Vorteil ist die Lichtquelle einer Halbleiterlichtquelle. Dies bewirkt, dass der Lichtstrahl besonders gut formbar ist und die Probe gleichmäßig erwärmen kann. Vorzugsweise umfasst das Heizelement eine Linse bzw. ein Linsensystem zur Definition der Ausdehnung des Wärmefelds.

Es ist bevorzugt, dass die Lichtquelle bzw. die Halbleiterlichtquelle ein Laser ist. Hierdurch können große Wärmemengen auf die Probe übertragen werden. Es ist ganz besonders bevorzugt, dass die Lichtquelle bzw. Halbleiterlichtquelle ein Diodenlaser ist. Hierdurch wird ein kompakter und kostengünstiger Aufbau des Heizelements erzielt. Zweckmäßigerweise beträgt die Erwärmungszeit wenigstens 10 bzw. 100 bzw. 1000ms. Es ist bevorzugt, dass das Heizelement während einer/der Erwärmungszeit ständig über 1 bzw. 2 bzw. 5 W an Wärmeleistung an die Probe abgibt. Es ist bevorzugt, dass die erwärmte Probenstelle durch das Wärmefeld einen Temperaturhub von wenigstens 1 bzw. 2 bzw. 3 bzw. 4 bzw. 5 K erfährt. Hierdurch wird ein ausreichend hohes Signal-Rausch-Verhältnis erzielt.

Es ist von Vorteil, dass die Pixelzeile wenigstens 3 bzw. 4 Pixel aufweist. Dies ermöglicht gute Signal-Rausch-Verhältnisse. Mit Vorteil umfasst die Pixelzeile wenigstens 6 bzw. 8 bzw. 10 Pixel. Es ist bevorzugt, dass die Pixelzeile höchstens 500 bzw. 200 bzw. 100 Pixel umfasst. Dies führt dazu, dass das Sensorelement kostengünstig ist.

Gemäß einer bevorzugten Ausführungsform weist die Probe eine Länge bzw. Ausdehnung in Bewegungsrichtung von wenigstens 1 bzw. 2 bzw. 5 bzw. 10 bzw. 50 bzw. 100 bzw. 500 bzw. 1000cm auf. Es ist von Vorteil, dass die Probe ein Band und insbesondere ein Metallband ist. Es ist ganz besonders bevorzugt, dass das Band bzw. Metallband beschichtet ist. Vorzugsweise wird eine Schichtdicke der Beschichtung bzw. der wenigstens einen Schicht auf dem Band bzw. Metallband hinsichtlich deren bzw. dessen Schichtdicke an der erwärmten Probenstelle erfasst. Wenn die Probe länglich ausgebildet ist bzw. mit Vorteil als Band ausgestaltet ist, so wird die Probe zweckmäßigerweise mittels eines Förderelements bzw. mittels Förderelementen bewegt. Das Förderelement bzw. die Förderelemente können beispielsweise Bänder oder Rollen sein, die die Probe bzw. das Band fördern bzw. führen bzw. antreiben. In diesen Anwendungsfällen ist eine Bewegung der Probe besonders vorteilhaft, um die Probe nacheinander an verschiedenen Bearbeitungs- bzw. Messstationen herbeizuführen. Aus diesem Grunde ist eine Bewegung der Wärmequelle bzw. des Sensors in Falle der länglich ausgebildeten Proben nicht zweckmäßig. Stattdessen empfiehlt sich die Anordnung des Messgeräts bzw. der Wärmequelle bzw. des Sensors an einer Stelle, an welcher die Probe vorbeibewegt wird.

Es ist bevorzugt, dass das Blickfeld eine Ausdehnung längs und/oder quer zur Bewegungsrichtung von wenigstens 10 bzw. 20 bzw. 50 bzw. 100 bzw. 200 mm aufweist. Mit Vorteil beläuft sich eine Ausdehnung des Blickfelds längs und/oder quer zur Bewegungsrichtung auf höchstens 2500 bzw. 2000 bzw. 1500 bzw. 1000 mm. Mit der Ausdehnung quer zur Bewegungsrichtung wird erreicht, dass einerseits eine vollständige Breite der vorbeibewegten Probe erfasst wird. Wird die Ausdehnung quer zur Bewegungsrichtung hingegen zu groß, so sinkt die räumliche Auflösung in Querrichtung, sodass gegebenenfalls in Querrichtung ein zweiter Sensor neben dem Sensor platziert werden kann, um die räumliche Auflösung zu verdoppeln bzw. um die räumliche Ausdehnung der Erfassung in Querrichtung zu verdoppeln. Die Ausdehnung längs zur Bewegungsrichtung des Blickfelds wird vorzugsweise an die Ausdehnung quer zur Bewegungsrichtung angenähert, sodass eine/die Sensoroptik keine zu starke Bündelung bzw. Aufweitung in eine der beiden Richtungen vornehmen muss. Durch die Anpassung der Ausdehnung längs zur Bewegungsrichtung wird somit erreicht, dass mithilfe einer einfacheren bzw. günstigeren Sensoroptik gearbeitet werden kann.

Es ist bevorzugt, dass das Wärmefeld eine Ausdehnung längs und/oder quer zur Bewegungsrichtung von wenigstens 10 bzw. 20 bzw. 50 bzw. 100 bzw. 200 mm aufweist mit Vorteil beträgt eine Ausdehnung des Wärmefelds längs und/oder quer zur Bewegungsrichtung auf der Probe von höchstens 2500 bzw. 2000 bzw. 1500 bzw. 1000 mm. Durch die Ausdehnung quer zur Bewegungsrichtung des Wärmefelds wird erreicht, dass eine vollständige und vorzugsweise möglichst gleichmäßige Erwärmung jeder Probenstelle der Probe erreicht wird. Es ist besonders bevorzugt, dass ein Temperaturhub der erwärmten Probenstellen an einer bestimmten relativen Positionen x um nicht mehr als 5 bzw. 2 bzw. 1 K voneinander abweichen. Hierdurch wird eine insgesamt gleichmäßigere Erwärmung bzw. ein insgesamt gleichmäßigerer Temperaturhub erzielt, was geringere Kalibrierung bei der Auswertung der vom Sensor ausgelesenen Daten bedeutet. Mit der Ausdehnung des Wärmefelds längs zur Bewegungsrichtung wird erreicht, dass eine/die Erwärmungszeit gesteuert wird.

Es ist möglich, dass das Wärmefeld in Bewegungsrichtung vollständig vor dem Blickfeld angeordnet ist, sodass insbesondere kein Überlapp zwischen dem Wärmefeld und dem Blickfeld besteht. Es ist möglich, dass ein in Bewegungsrichtung X hinterer Bereich des Wärmefelds sich mit einem in Bewegungsrichtung X vorderen Bereich des Blickfelds überlappt. Es ist möglich, dass das Wärmefeld vollständig innerhalb des Blickfelds liegt. Gemäß einer Ausführungsform sind die Positionierung sowie auch die Ausformung des Wärmefelds und des Blickfelds deckungsgleich.

Gemäß einer besonders bevorzugten Ausführungsform istdie relative Bewegungsgeschwindigkeit der Probe v_{P} gegenüber dem Blickfeld kleiner als die vierfache bzw. dreifache bzw. zweifache Ausdehnung eines Blickfeldbereichs Δx in Bewegungsrichtung geteilt durch eine Periode der Bildwiederholrate t_{Frame}, so dass vorzugsweise gilt: v_{P} < 4*(Δx)/t_{Frame} bzw. v_{P} < 3*(Δx)/t_{Frame} bzw. V_{P} < 2*(Δx)/t_{Frame}. Hierdurch wird erreicht, dass die Probe nicht zu schnell durch das Blickfeld bewegt wird und Daten verloren gehen bzw. Pixel von der erwärmten Probenstelle praktisch übersprungen werden.

Vorzugsweise umfasst das fotothermische Messgerät das Heizelement. Es ist von Vorteil, dass das fotothermische Messgerät ein Gehäuse aufweist. Das Gehäuse haust bevorzugt wenigstens teilweise und bevorzugt vollständig das Heizelement und wenigstens teilweise und bevorzugt vollständig den Sensor ein.

Das fotothermische Messgerät umfasst vorzugsweise eine Steuerungseinheit. Die Steuerungseinheit kann einen Rechner bzw. Prozessor bzw. Programm zur Steuerung des Messverfahrens aufweisen. Die Steuerungseinheit umfasst mit Vorteil ein Modul zur Wiedergabe von Tiefenprofil-Informationen der erwärmten Probenstelle. Die Steuerungseinheit weist bevorzugt ein Modul zur Einstellung wenigstens eines Messparameters auf. Der wenigstens eine Messparameter kann beispielsweise ein Auslesetakt des Sensorelements oder eine Auswahl der für die Tiefenprofil-Informationen heranzuziehenden Pixel des Sensorelements sein.

Es ist von Vorteil, dass die Steuerungseinheit einen Wert der relativen Geschwindigkeit von einem externen Gerät und/oder von einem Geschwindigkeitsdetektor erhält. Das externe Gerät kann beispielsweise eine Kontrolleinheit eines/des Förderelements sein. Der Geschwindigkeitsdetektor ist bevorzugt ein Bestandteil des fotothermischen Messgeräts und kann eine Kamera zur Erfassung der relativen Probengeschwindigkeit sein. Es ist von Vorteil, dass der Geschwindigkeitsdetektor bzw. das externe Gerät in zeitlichen Abständen von höchstens 1 Tag bzw. 1 Stunde bzw. 10 Minuten bzw. 1 Minute bzw. 10s einen Wert der relativen Bewegungsgeschwindigkeit der Probe an die Steuerungseinheit übermittelt. Besonders vorzugsweise ist das fotothermische Messgerät bzw. die Steuerungseinheit so ausgebildet, dass ein Auslesen des Sensorelements bzw. ein Auslesetakt des Sensorelements bzw. die zeitlichen Abstände der Lesedaten bzw. die Zeitdifferenz an die übermittelte relative Bewegungsgeschwindigkeit der Probe angepasst wird.

Es ist sehr bevorzugt, dass aus der ersten Temperatur T (t1) und der zweiten Temperatur T (t2) und vorzugsweise aus weiteren Temperaturen des Temperaturverlauf T (t) der erwärmten Probenstelle (8) ein Tiefenprofil berechnet wird. Das Tiefenprofil gibt vorzugsweise Aufschluss über eine Schichtdicke an der erwärmten Probenstelle. Im Falle des Vorhandenseins lediglich einer Pixelzeile wird die Schichtdicke auf der Probe entlang einer Linie ermittelt. Es ist möglich, die Schichtdicke bzw. das Tiefenprofil einer Tiefe z über den Ort x in Bewegungsrichtung X in einem Diagramm darzustellen. Es ist möglich, die gescannte Linie auf der Probe als eine Falschfarben-Linie darzustellen, sodass beispielsweise große Schichtdicken in rot und geringe Schichtdicken in blau dargestellt werden. Es ist besonders bevorzugt, dass der Sensor mehrere Pixelzeilen umfasst und somit mehrere nebeneinanderliegende Scanlinien auf der Probe erfasst. Die Zahl der Scanlinien hängt zweckmäßigerweise von der Zahl der Pixel in Querrichtung bzw. von der Zahl der Pixelzahlen bzw. von der Zahl der Pixel je Pixelspalte ab. Es ist möglich, das Tiefenprofil bzw. eine Schichtdicke der Probe als dreidimensionale Darstellung abzubilden. Gemäß einer Ausführungsform kann das Tiefenprofil bzw. die Schichtdicke entlang der Probe als Falschfarbendarstellung flächig visualisiert werden.

Die eingangs genannte Aufgabe wird gelöst durch ein fotothermisches System gemäß dem Anspruch 10.

Nachfolgend wird die Erfindung anhand von mehreren Ausführungsbeispielen und mithilfe von 10 Figuren erläutert. Es zeigen in schematischer Darstellung
- Fig. 1: das grundsätzliche, fotothermische Prinzip anhand zweier unterschiedlicher Temperaturverläufe,
- Fig. 2: die Erfassung eines Temperaturverlaufs gemäß dem konventionellen Stand der Technik,
- Fig. 3: einen Systemaufbau eines jüngeren Stands der Technik,
- Fig. 4: die Erfassung des Temperaturverlaufs gemäß dem jüngeren Stand der Technik,
- Fig. 5: einen Systemaufbau eines ersten Ausführungsbeispiels der Erfindung in einer Seitenansicht,
- Fig. 6: die Erfassung des Temperaturverlaufs im Falle des ersten Ausführungsbeispiels,
- Fig. 7: einen Systemaufbau eines zweiten Ausführungsbeispiels in einer Seitenansicht,
- Fig. 8: die Erfassung des Temperaturverlaufs im Falle des zweiten Ausführungsbeispiels,
- Fig. 9: einen Systemaufbau eines dritten Ausführungsbeispiels der Erfindung in einer Seitenansicht und
- Fig. 10: die Erfassung des Temperaturverlaufs im Falle des dritten Ausführungsbeispiels.

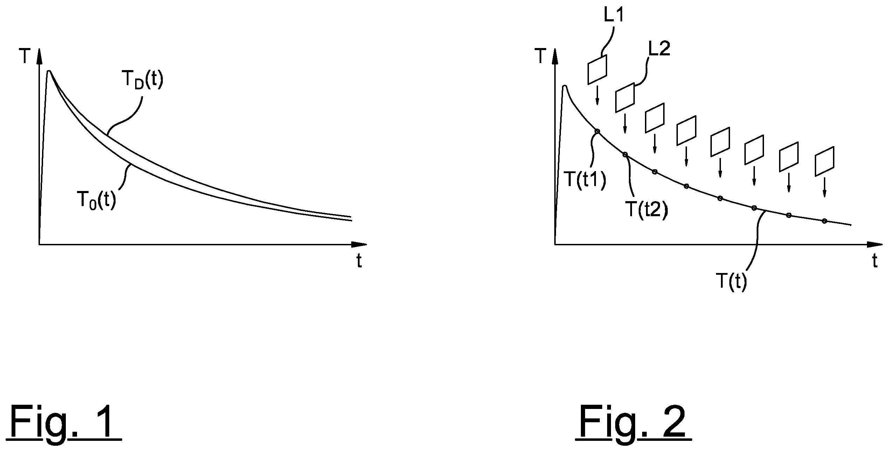

In Fig. 1 ist in einem T(t)-Diagramm die Temperatur T in Grad Celsius oder Kelvin gegenüber der Zeit t aufgetragen. Eine hier nicht dargestellte Probenstelle wird mit einem hier ebenfalls nicht dargestellten Heizelement erwärmt, woraufhin die thermische Anregung beendet wird und der Temperaturverlauf T(t) exponentiell abklingt.

In dem Diagramm aus Fig. 1 sind ein Temperaturverlauf T₀ (t) einer homogenen Probenstelle sowie ein Temperaturverlauf T_{D}(t) einer Probenstelle mit einem Defekt, beispielsweise einem Luftbläschen, dargestellt. Da die thermische Abstrahlung der Probe bzw. Probenstelle verhältnismäßig langsam vonstattengeht, kann die thermische Rückstrahlung der Probe bzw. Probenstelle gut über der Zeit t erfasst werden. Insbesondere können spätere Zeitpunkte des Temperaturverlaufs T(t) größeren Tiefen der Probenstelle zugeordnet werden. Über eine Differenzbildung T_{D}(t) - T₀(t) kann der Defekt in der Probenstelle einer bestimmten Tiefe zugeordnet werden. Insbesondere können aber auch Grenzflächen von zwei Schichten bzw. die Grenzfläche eines Schichtübergangs von einer ersten zu einer zweiten Schicht mit diesem fotothermischen Verfahren ermittelt werden.

In Fig. 2 ist ein Temperaturverlauf T(t) gezeigt, der mittels Anregung durch eine Blitzlichtlampe aus dem konventionellen Stand der Technik hervorgerufen wurde. Eine Wärmebildkamera mit einer bestimmten Bilderrate oder *Framerate* tastet dabei in regelmäßigen Abständen zu den Zeitpunkten t1, t2, usw. den Temperaturverlauf T(t) ab. Die jeweils von der Wärmebildkamera ausgelesenen Lesedaten L1, L2 werden jeweils den unterschiedlichen Lesezeitpunkten t1, t2, usw. zugeordnet. Mithilfe der zum Lesezeitpunkt t1 ausgelesenen Lesedaten L1, den zum Lesezeitpunkt t2 ausgelesenen Daten L2 usw. kann dann der Temperaturverlauf T(t) interpoliert bzw. rekonstruiert werden.

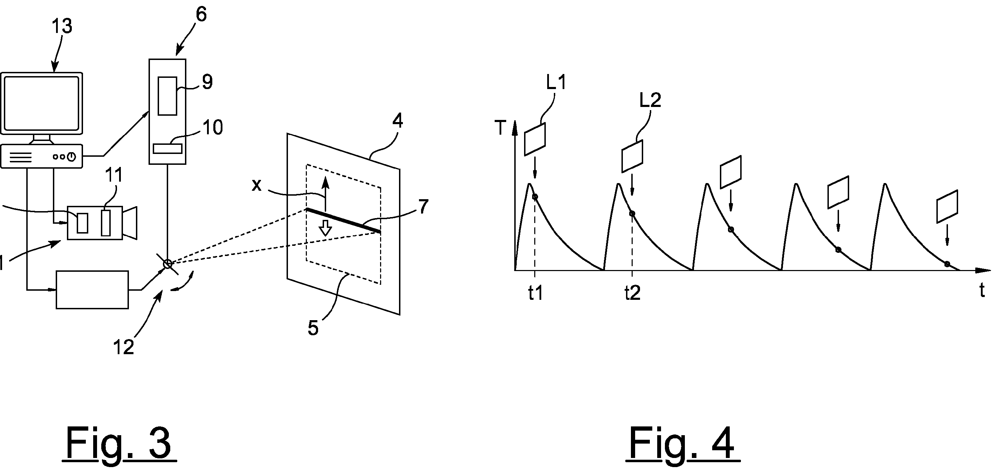

In Fig. 3 ist ein fotothermisches System 1, 6, 12, 13 eines jüngeren Stands der Technik (CN 103234953A) abgebildet, welches ein fotothermisches Messgerät 1, 6, 12 und eine Steuerungseinheit 13 umfasst. Das fotothermische Messgerät 1, 6, 12 weist einen Sensor 1, ein Heizelement 6 und einen Galvospiegel 12 auf. Das Heizelement 6 umfasst eine Lichtquelle 9, welche gemäß diesem jüngeren Stand der Technik ein Laser ist. Der Laserstrahl wird mittels einer Linse bzw. eines Linsensystems 10 des Heizelements 6 kollimiert und im Querschnitt stark in die Länge gezogen. Der derart geformte Laserstrahl ist auf den Galvospiegel 12 gerichtet, welcher den Laserstrahl auf eine Probe 4 wirft. Mithilfe der Drehung des Galvospiegels 12 kann dadurch der sehr länglich geformte Laserstrahl in Höhenrichtung abgelenkt und über der Probe verfahren werden. Hierdurch kann eine recht große Fläche auf der Probe 4 thermisch angeregt werden, welche auf der Probe 4 gestrichelt dargestellt ist.

Dabei ist zu berücksichtigen, dass in Fig. 3 die Fläche bzw. die Querschnittsfläche des Laserstrahls auf der Probe 4 jeweils die Position bzw. Fläche auf der Probe 4 markiert, welche thermisch angeregt wird. Folglich ist die Querschnittsfläche des Laserstrahls bzw. Anregungsstrahls auf der Probe 4 ein Wärmefeld 7. Das Wärmefeld 7 bewegt sich gemäß Fig. 3 nach unten, wie dies mit dem dicken Pfeil symbolisiert ist. Folglich ist eine Bewegungsrichtung X der Probe 4 relativ zum Wärmefeld 7 nach oben gerichtet, was mit einem dünnen Pfeil gekennzeichnet ist.

Gemäß Fig. 3 und damit entsprechend dem jüngeren Stand der Technik erfasst ein Sensor 1 in Form einer Wärmebildkamera eine thermische Abstrahlung der Probe 4. Der Sensor 1 weist ein Sensorelement 2 auf, welches als Pixelmatrix ausgebildet ist. Der Sensor 1 bzw. die Wärmebildkamera umfasst eine Sensoroptik 11, die einen Bereich der Probe 4 bzw. eine Oberfläche der Probe 4 auf dem Sensorelement 2 abbildet. Darüber hinaus umfasst die Sensoroptik 11 auch noch ein Filter, um die Anregungsstrahlung, insbesondere die kurzwelligere Anregungsstrahlung, herauszufiltern.

Der Sensor 1 bzw. die Sensoroptik 11 des jüngeren Stands der Technik nach Fig. 3 mag so ausgebildet sein, dass die Pixelmatrix bzw. das Sensorelement 2 so auf der Probe 4 abgebildet wird, dass der Bildbereich des Sensors 1 bzw. der Wärmebildkamera gerade der gestrichelten Fläche auf der Probe 4 entspricht. Dieser Bereich wird nachfolgend "Blickfeld" genannt. Das Blickfeld 5 entspricht somit derjenigen Fläche, die auf den Bildern des Sensors 1 bzw. der Wärmebildkamera abgebildet wird. Eine Steuerungseinheit 13 steuert den Sensor 1, das Heizelement 6 sowie den Galvospiegel 12 an und synchronisiert diese Elemente 1, 6, 12 zueinander.

In Fig. 4 ist der Temperaturverlauf T(t) einer einzigen Probenstelle gezeigt, die mithilfe des Wärmefelds 7 aus Fig. 3 wiederholt thermisch angelegt wird. Für die wiederholte, thermische Anregung sind Laser deutlich besser als Blitzlampen geeignet, weil Laser eine hochfrequente, intensitäts- und zeitstabile Anregung ermöglichen. Dabei kann die Frequenz bzw. Anregungsfrequenz problemlos so gewählt werden, dass sie etwas größer ist als die größte, zur Verfügung stehende Bilderrate des Sensors 1. Hierdurch verschieben sich die Lesezeitpunkte t1, t2, usw. im Laufe des abklingenden Teils der einzelnen Anregungskurven aus dem T(t)-Diagramm, sodass das Abklingverhalten dieser Probenstelle mit jeder neuen thermischen Anregung sukzessive abgetastet wird.

Dann wird das Wärmefeld 7 um einen Schritt weiter auf der Probe verfahren, sodass die Messung gemäß Fig. 4 wiederholt werden kann und das gesamte Blickfeld 5 auf der Probe 4 schrittweise abgetastet wird. Folglich wird mit jedem Schritt des Wärmefelds 7 auf der Probe 4 eine neue Serie von Lichtpulsen bzw. Wärmepulsen gemäß Fig. 4 emittiert. Am Ende dieses Vorgangs liegt ein Datensatz vor, welcher eine Schichtdickeninformation zu jeder Probenstelle im Blickfeld 5 beinhaltet. Die Schichtdicke kann in diesem zweidimensionalen Bild beispielsweise mittels Falschfarben dargestellt werden.

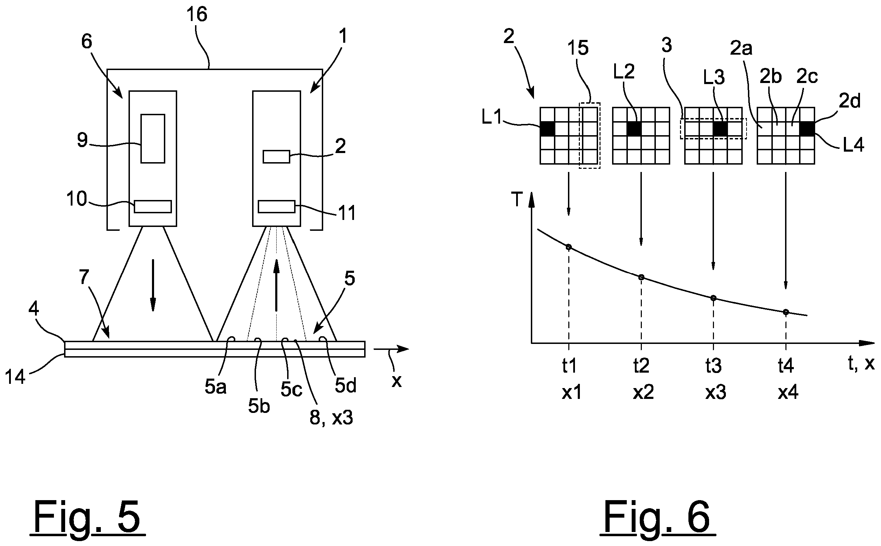

In Fig. 5 ist eine Seitenansicht eines erfindungsgemäßen fotothermischen Systems 1, 6, 16 eines ersten Ausführungsbeispiels gezeigt. Eine Steuerungseinheit des fotothermischen Systems 1, 6, 16 ist hier nicht abgebildet, aber vorzugsweise vorhanden. Das fotothermische System 1, 6, 16 umfasst gemäß Fig. 5 ein fotothermisches Messgerät 1, 6, 16. Das fotothermische Messgerät 1, 6, 16 weist einen Sensor 1 sowie bevorzugt ein Heizelement 6 auf. Das Heizelement 6 umfasst mit Vorteil eine Lichtquelle 9 und bevorzugt eine Linse bzw. ein Linsensystem 10. Es ist bevorzugt, dass das fotothermische Messgerät 1, 6, 16 ein Gehäuse 16 aufweist, welches vorzugsweise den Sensor 1 und das Heizelement 6 einhaust.

In diesem Ausführungsbeispiel ist die Lichtquelle 9 als Diodenlaser ausgebildet, welcher beispielsweise bei einer Wellenlänge von 1400 nm eine optische Leistung von z.B. 30 W bietet. Die Linse bzw. das Linsensystem 10 wirft den Lichtstrahl des Heizelements 6 bzw. der Lichtquelle 9 auf eine Probe 4.

Die Probe 4 ist in diesem Ausführungsbeispiel ein beschichtetes Metallband. Es ist bevorzugt, dass die Probe 4 mittels eines Förderelements 14 in einer Bewegungsrichtung X gefördert wird. Das Förderelement 14 kann beispielsweise ein Endlosförderer bzw. ein umlaufendes Förderband sein. Somit bewegt sich eine bestimmte, gedachte Probenstelle der Probe 4 in der Bewegungsrichtung X und damit relativ zu dem Heizelement 6 bzw. dem Sensor 1. In diesem Ausführungsbeispiel sind das Heizelement 6 und/oder der Sensor 1 jedenfalls während der Messungen bzw. der Betriebszeit fest installiert bzw. unbeweglich. Das Band bzw. die Probe 4 kann in einer Draufsicht eine Ausdehnung senkrecht zur Bewegungsrichtung X von beispielsweise 500 mm aufweisen.

Es ist bevorzugt, dass die Linse bzw. das Linsensystem 10 den Lichtstrahl auf der Probe 4 abbildet und dort ein Wärmefeld 7 erzeugt. Das Wärmefeld 7 ist vorzugsweise so ausgebildet, dass jeder Oberflächenpunkt bzw. jede Probenstelle der vorbeibewegten Probe 4 nach Verlassen des Wärmefelds 7 einen Temperaturhub von wenigsten 2°C erfahren hat. Es ist bevorzugt, dass alle Probenstellen der Probe 4 etwa gleich stark thermisch angeregt werden. Es ist von Vorteil, dass das Wärmefeld 7 auf der Probe 4 einem Rechteck bzw. gleichmäßigen Querstreifen auf der Probe 4 entspricht.

Im ersten Ausführungsbeispiel nach Fig. 5 umfasst der Sensor 1 ein Sensorelement 2 und vorzugsweise eine Sensoroptik 11. Die Sensoroptik 11 bildet zweckmäßigerweise das Sensorelement 2 auf der Probe 4 ab, sodass ein Blickfeld 5 auf der Probe 4 erzeugt wird. In diesem Ausführungsbeispiel ist das Sensorelement 2 als Pixelmatrix ausgebildet und mag 80 x 64 Pixel aufweisen. Das Sensorelement 2 kann 80 Pixelzeilen 3 sowie 64 Pixelspalten 15 aufweisen. Zweckmäßigerweise ist jeder Pixel 2a, 2b, 2c, 2d Bestandteil einer Pixelzeile 3 und einer Pixelspalte 15. Jedem Pixel 2a, 2b 2c, 2d (s. Fig. 6) ist ein Blickfeldbereich 5a, 5b, 5c, 5d des Blickfelds 5 auf der Probe 4 zugeordnet.

Somit durchläuft eine Probenstelle der Probe 4 zunächst das Wärmefeld 7, wodurch unter anderem auch diese Probenstelle erwärmt wird. Diese so erwärmte Probenstelle 8 durchläuft gemäß dem ersten Ausführungsbeispiel nach Fig. 5 dann das Blickfeld 5 des Sensors 1 bzw. nacheinander die Blickfeldbereiche 5a bis 5d, die zu den Pixeln 2a bis 2d gehören. Die Fig. 5 zeigt eine Situation, in welcher die erwärmte Probenstelle 8 sich innerhalb des Blickfeldbereichs 5c befindet, sodass die Wärmeabstrahlung der erwärmten Probenstelle 8 an der Stelle x3 innerhalb des Blickfeldbereichs 5c von dem Pixel 2c erfasst wird.

Im ersten Ausführungsbeispiel gemäß den Fig. 5 und 6 bildet der Pixel 2a den Blickfeldbereich 5a ab, welcher in Bewegungsrichtung X hinter dem Wärmefeld 7 angeordnet ist, sodass bereits im ersten Blickfeldbereich 5a eine Abkühlung der erwärmten Probenstelle 8 vorliegt. Diese Abkühlung setzt sich gemäß der durchgezogenen Kurve in dem T(t)-Diagramm in Fig. 6 fort. Der Einfachheit ist in Fig. 6 lediglich ein Sensorelement 2 mit 4x4 Pixeln 2a, 2b, 2c, 2d abgebildet.

Der Sensor 1 ist bevorzugt so ausgebildet, dass das Sensorelement 2 bzw. der Pixel 2a ausgelesen wird, wenn sich die erwärmte Probenstelle 8 im ersten Blickfeldbereich 5a bzw. an der Stelle x1 zum Zeitpunkt t1 befindet, s. Fig. 6. Ebenso wird das Sensorelement 2 bzw. der Pixel 2b ausgelesen, wenn die erwärmte Probenstelle 8 sich zum Zeitpunkt t2 an der Position x2 befindet. Das Auslesen wiederholt sich zweckmäßigerweise analog im Falle der Pixel 2c, 2d, sodass zu den Zeitpunkten t3 und t4 ebenfalls jeweils ein Wärmebild des Blickfelds 5 erfasst wird. In Fig. 6 ist lediglich eine vereinfachte Darstellung des Sensorelements 2 gezeigt, so dass das Auslesen des Sensorelements 2 je erwärmter Probenstelle 8 insgesamt 64-mal wiederholt werden kann.

Dabei ist - in diesem Ausführungsbeispiel - die Abtastfrequenz (tₙ - tₙ₋₁)⁻¹ so gewählt, dass diese der Frequenz des Durchlaufens der erwärmten Probenstelle 8 durch die Blickfeldbereiche 5a-5d entspricht. Folglich wird immer dann ein Wärmebild aufgenommen, wenn die erwärmte Probenstelle innerhalb des nächsten Blickfeldbereichs 5a-5d, vorzugsweise in der Mitte des nächsten Blickfeldbereichs 5a-5d, liegt. Somit kann der Pixel 2a zum Zeitpunkt t1 der erwärmten Probenstelle 8 an der Stelle x1 zugeordnet werden, s. Fig. 6. Gleiches gilt für den Pixel 2b, welcher zum Zeitpunkt t2 die Wärmeabstrahlung der erwärmten Probenstelle 8 an der Stelle x2 bzw. in Blickfeldbereich 5b emittiert. Analog wird auch die Wärmeabstrahlung der erwärmten Probenstelle 8 in den Blickfeldbereichen 5c und 5d erfasst.

Da innerhalb des Zeitraums tₙ - tₙ₋₁ die erwärmte Probenstelle 8 merklich abkühlt, kann auf diese Weise der Temperaturverlauf T(t) der erwärmten Probenstelle 8 während deren Abkühlung gemäß Fig. 6 erfasst werden. Im vorliegenden Ausführungsbeispiel werden zu den Zeitpunkten t1 bis t4 jeweils die Lesedaten L1 bis L4 der Pixel 2a bis 2d erfasst, wobei die Lesedaten in L1 bis L4 jeweils den Daten des jeweiligen Pixels 2a bis 2d entsprechen. Der auf diese Weise abgetastete Temperaturverlauf T(t) kann dann interpoliert und zu einer Temperaturverlaufskurve T(t) rekonstruiert werden. Dies wiederum ermöglicht die Berechnung eines Tiefenprofils bzw. die Bestimmung von Schichtdicken an der erwärmten Probenstelle 8.

Das Wärmefeld 7 liegt vorzugsweise während der Bewegung der Probe 4 permanent vor, so dass der erwärmten Probenstelle 8 eine weitere erwärmte Probenstelle nachfolgt bzw. viele weitere erwärmte Probenstellen nachfolgen. Die weitere erwärmte Probenstelle mag sich zum Zeitpunkt t2 in dem Blickfeldbereich 5a befinden, während die erwärmte Probenstelle 8 bereits im Blickfeldbereich 5b befindlich ist. Die weitere erwärmte Probenstelle wird zweckmäßigerweise von dem ersten Pixel 2a zum Zeitpunkt t2 erfasst, wobei der zweite Pixel ausgelesen wird und weitere Lesedaten liefert, was in den Figuren nicht dargestellt ist. Vorzugsweise werden die weiteren Lesedaten der weiteren erwärmten Probenstelle gemeinsam - insbesondere innerhalb eines gemeinsamen Frames bzw. Bilds bzw. ausgelesenen Datensatzes des Sensorelements - mit den zweiten Lesedaten L2 der erwärmten Probenstelle 8 ausgelesen.

Hierdurch wird erreicht, dass der erste Pixel 2a und zweite Pixel 2b parallel genutzt werden, so dass die Temperaturverläufe T der erwärmten Probenstelle 8 sowie der weiteren erwärmten Probenstelle um einen Pixel zeitversetzt, aber parallel erfasst werden. Dies kann mit jedem weiteren Pixel 2c, 2d der Pixelzeile 3 wiederholt werden. Beispielsweise kann zum Zeitpunkt t4 der Pixel 2d die Temperatur der erwärmten Probenstelle 8 ermitteln, während der Pixel 2c die Temperatur der weiteren erwärmten Probenstelle erfasst, während die Pixel 2b und 2a die Temperatur von jeweils einer noch weiteren Probenstelle ermitteln.

Folglich kann die Pixelzeile 3 aufgrund der 64 Pixelspalten 15 gleichzeitig 64 Temperaturen von 64 erwärmten, hintereinander liegenden Probenstellen erfassen. Aufgrund der 80 Pixelzeilen des Sensorelements 2 dieses Ausführungsbeispiels können gleichzeitig 80 nebeneinander liegende erwärmte Probenstellen 8 hinsichtlich ihres Tiefenprofils bzw. ihrer Schichtdicken vermessen werden. Damit wird eine räumliche Auflösung senkrecht zur Bewegungsrichtung X von 6,25mm erzielt. Demgegenüber wird die räumliche Auflösung in Bewegungsrichtung X durch die Ausdehnung der einzelnen Blickfeldbereiche 5a-5d in Bewegungsrichtung X definiert. Diese kann beispielsweise 5 oder 10mm betragen.

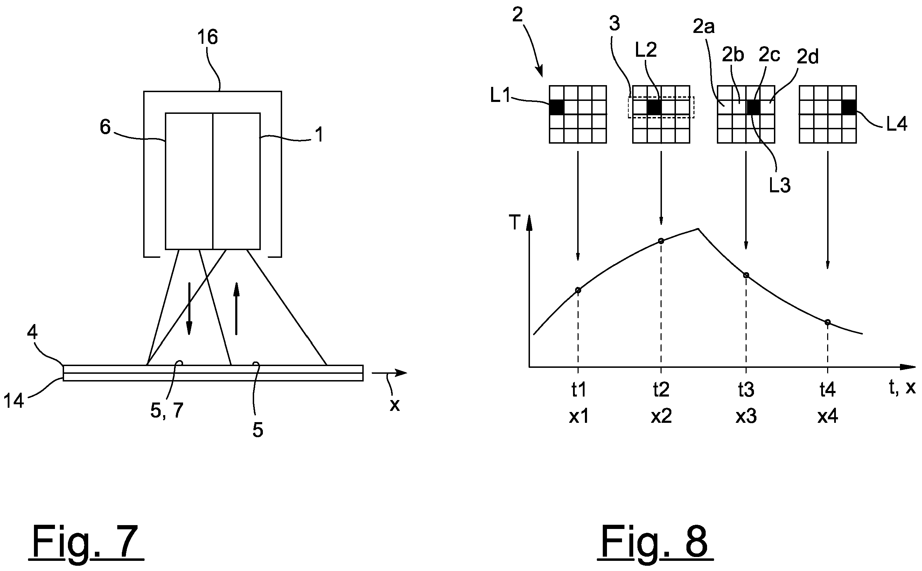

In den Fig. 7 und 8 ist ein zweites Ausführungsbeispiel gezeigt. Demzufolge überlappen sich das Wärmefeld 7 und das Blickfeld 5 teilweise. In diesem Ausführungsbeispiel sind das Wärmefeld 7 und das Blickfeld 5 so ausgebildet, dass das Wärmefeld 7 eine erste Hälfte in Bewegungsrichtung X des Blickfelds 5 einnimmt. Hierdurch wird gemäß Fig. 8 zunächst eine Erwärmung im Temperaturverlauf T(t) festgestellt, wobei die erwärmte Probenstelle 8 nach Verlassen des Wärmefeld 7 abkühlt, s. die Zeitpunkte t3 und t4.

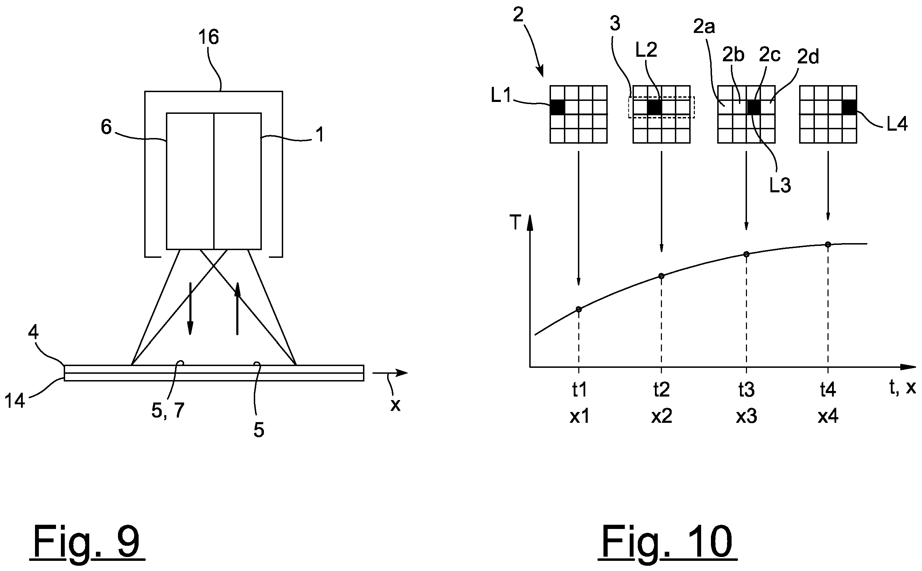

In einem dritten Ausführungsbeispiel gemäß den Fig. 9 und 10 überlappen sich das Wärmefeld 7 und das Blickfeld 5 vollständig. Somit wird eine erwärmte Probenstelle 8 über die ganze Ausdehnung des Blickfelds 5 in Bewegungsrichtung X hinweg erwärmt, sodass der Temperaturverlauf T(t) gemäß Fig. 10 lediglich eine Erwärmung der erwärmten Probenstelle 8 zeigt. Auch aus diesen Temperaturverläufen T(t) können Tiefenprofile der erwärmten Probenstelle 8 bzw. Schichtdicken der erwärmten Probenstelle 8 bestimmt werden.

### Bezugszeichenliste

- 1: Sensor
- 2: Sensorelement
- 2a-2d: Pixel
- 3: Pixelzeile
- 4: Probe
- 5: Blickfeld
- 5a-5d: Blickfeldbereich
- 6: Heizelement
- 1, 6, 16: Fotothermisches Messgerät
- 7: Wärmefeld
- 8: Erwärmte Probenstelle
- 9: Lichtquelle
- 10: Linse bzw. Linsensystem
- 11: Sensoroptik
- 12: Galvospiegel
- 13: Steuerungseinheit
- 14: Förderelement für 4
- 15: Pixelspalte
- 16: Gehäuse
- X: Bewegungsrichtung
- x1, x2: relative Position von 8
- t1, t2: Zeitpunkte von 8 bei x1 bzw. x2
- T(t1): Temperatur von 8 zu t1 bzw. an der Stelle x1
- L1: Erste Lesedaten bei t1 bzw. x1
- L2: Zweite Lesedaten bei t2 bzw. x2
- L3: Dritte Lesedaten bei t3 bzw. x3
- L4: Vierte Lesedaten bei t4 bzw. x4

## Patentansprüche

1. Fotothermisches Messverfahren, wobei ein fotothermisches Messgerät (1, 6, 16) einen Sensor (1) zur Erfassung von Wärmestrahlung umfasst, wobei der Sensor (1) ein Sensorelement (2) mit einer Mehrzahl von Pixeln (2a, 2b, 2c, 2d) aufweist, wobei wenigstens zwei der Pixel (2a, 2b, 2c, 2d) eine Pixelzeile (3) des Sensorelements (2) bilden, wobei eine Probe (4) auf dem Sensorelement (2) abgebildet und ein Blickfeld (5) des Sensorelements (2) auf einer Oberfläche der Probe (4) definiert wird, wobei einem ersten Pixel (2a) der Pixelzeile (3) ein erster Blickfeldbereich (5a) auf der Probe (4) zugeordnet ist, wobei einem zweiten Pixel (2b) ein zweiter Blickfeldbereich (5b) auf der Probe (4) zugeordnet ist, wobei ein Heizelement (6) auf der Probe (4) ein Wärmefeld (7) erzeugt und wenigstens eine Probenstelle (8) bzw. Probenfläche der Probe (4) erwärmt, wobei die erwärmte Probenstelle (8) relativ zum Wärmefeld (7) bewegt wird, wobei die relative Bewegung der Probe (4) zum Wärmefeld (7) eine Bewegungsrichtung (X) definiert,
**dadurch gekennzeichnet, dass**
die erwärmte Probenstelle (8) relativ zum und durch das Blickfeld (5) bzw. relativ durch den ersten Blickfeldbereich (5a) und dann relativ durch den zweiten Blickfeldbereich (5b) bewegt wird, wobei die erwärmte Probenstelle (8) während des relativen Bewegens innerhalb des Blickfelds (5) ihre Temperatur ändert und einen Temperaturverlauf T(t) über der Zeit (t) durchläuft, wobei der erste Pixel (2a) ausgelesen wird und erste Lesedaten (L1) der erwärmten Probenstelle (8) aus dem ersten Blickfeldbereich (5a) liefert,
wobei der zweite Pixel (2b) ausgelesen wird und zweite Lesedaten (L2) der erwärmten Probenstelle (8) aus dem zweiten Blickfeldbereich (5b) liefert, wobei der zweite Pixel (2b) nach dem ersten Pixel (2a) ausgelesen wird, wobei die ersten Lesedaten (L1) und die zweiten Lesedaten (L2) aufgrund der relativen Bewegung zwischen der erwärmten Probenstelle (8) und dem Blickfeld (5) unterschiedlichen relativen Positionen (x1, x2) der erwärmten Probenstelle (8) relativ zum Blickfeld (5) zugeordnet sind und unterschiedlichen Zeitpunkten (t1, t2) des Temperaturverlaufs T(t) der erwärmten Probenstelle (8) zugeordnet werden, so dass die ersten Lesedaten (L1) Daten für eine erste Temperatur T(t1) und die zweiten Lesedaten (L2) Daten für eine zweite Temperatur T(t2) des Temperaturverlaufs T(t) der erwärmten Probenstelle (8) liefern.

2. Fotothermisches Messverfahren nach Anspruch 1, wobei eine weitere erwärmte Probenstelle nach der erwärmten Probenstelle (8) den ersten Blickfeldbereich (5a) erreicht, wobei der erste Pixel (2a) ausgelesen wird und weitere Lesedaten der weiteren erwärmten Probenstelle aus dem ersten Blickfeldbereich (5a) liefert, wobei die weiteren Lesedaten nach den ersten Lesedaten (L1) ausgelesen werden, wobei die weiteren Lesedaten der weiteren erwärmten Probenstelle vorzugsweise gemeinsam - insbesondere innerhalb eines gemeinsamen Frames - mit den zweiten Lesedaten (L2) der erwärmten Probenstelle (8) ausgelesen werden.

3. Fotothermisches Messverfahren nach Anspruch 1 oder 2, wobei zu einem bestimmten Zeitpunkt (tᵢ) jeder Pixel (2a, 2b, 2c, 2d) der Pixelzeile (3) des Sensorelements (2) einer jeweils anderen erwärmten Probenstelle (8) bzw. einem jeweils anderen Temperaturverlauf Tₙ zuordenbar ist.

4. Fotothermisches Messverfahren nach einem der Ansprüche 1 bis 3, wobei die Pixelzeile (3) Bestandteil einer Pixelmatrix des Sensorelements (2) ist.

5. Fotothermisches Messverfahren nach einem der Ansprüche 1 bis 4, wobei das Heizelement (6) eine Lichtquelle (9) umfasst.

6. Fotothermisches Messverfahren nach einem der Ansprüche 1 bis 5, wobei die Probe (4) eine Länge von wenigstens 1 bzw. 2 bzw. 5 bzw. 10cm aufweist.

7. Fotothermisches Messverfahren nach einem der Ansprüche 1 bis 6, wobei das Blickfeld (5) und/oder das Wärmefeld (7) eine Ausdehnung längs und/oder quer zur Bewegungsrichtung von wenigstens 10 bzw. 20 bzw. 50 bzw. 100mm aufweist.

8. Fotothermisches Messverfahren nach einem der Ansprüche 1 bis 7, wobei die relative Bewegungsgeschwindigkeit der Probe (4) v_{P} gegenüber dem Blickfeld (5) kleiner ist als die vierfache bzw. dreifache bzw. zweifache Ausdehnung eines Blickfeldbereichs Δx in Bewegungsrichtung geteilt durch eine Periode der Bildwiederholrate t_{Frame}, so dass vorzugsweise gilt: v_{P} < 4*(Δx)/t_{Frame} bzw. V_{P} < 3*(Δx)/t_{Frame} bzw. v_{P} < 2*(Δx)/t_{Frame}.

9. Fotothermisches Messverfahren nach einem der Ansprüche 1 bis 8, wobei das fotothermische Messgerät (1, 6, 16) das Heizelement (6) umfasst, wobei das fotothermische Messgerät (1, 6) bevorzugt ein Gehäuse (16) aufweist, wobei das Gehäuse (16) vorzugsweise das Heizelement (6) und den Sensor (1) einhaust.

10. Fotothermisches System, umfassend ein fotothermisches Messgerät (1, 6, 16), wobei das Messgerät (1, 6, 16) einen Sensor (1) zur Erfassung von Wärmestrahlung umfasst, wobei der Sensor (1) ein Sensorelement (2) mit einer Mehrzahl von Pixeln (2a, 2b, 2c, 2d) aufweist, wobei wenigstens zwei der Pixel (2a, 2b, 2c, 2d) eine Pixelzeile (3) des Sensorelements (2) bilden, wobei eine Probe (4) auf dem Sensorelement (2) abgebildet und ein Blickfeld (5) des Sensorelements (2) auf einer Oberfläche der Probe (4) definiert wird, wobei einem ersten Pixel (2a) der Pixelzeile (3) ein erster Blickfeldbereich (5a) auf der Probe (4) zugeordnet ist, wobei einem zweiten Pixel (2b) ein zweiter Blickfeldbereich (5b) auf der Probe (4) zugeordnet ist,
wobei ein Heizelement (6) vorgesehen ist und auf der Probe (4) ein Wärmefeld (7) erzeugen und wenigstens eine Probenstelle (8) bzw. Probenfläche der Probe (4) erwärmen kann, wobei die erwärmte Probenstelle (8) relativ zum Wärmefeld (7) bewegbar ist, wobei die relative Bewegung der Probe (4) zum Wärmefeld (7) eine Bewegungsrichtung (X) definiert,
**dadurch gekennzeichnet, dass**
die erwärmte Probenstelle (8) relativ zum und durch das Blickfeld (5) bzw. relativ durch den ersten Blickfeldbereich (5a) und dann relativ durch den zweiten Blickfeldbereich (5b) bewegbar ist, wobei die erwärmte Probenstelle (8) während des relativen Bewegens innerhalb des Blickfelds (5) ihre Temperatur ändert und einen Temperaturverlauf T(t) über der Zeit (t) durchlaufen kann,
wobei der Sensor (1) bzw. das fotothermische Messgerät (1, 6, 16) so ausgebildet ist, dass der erste Pixel (2a) ausgelesen wird und erste Lesedaten (L1) der erwärmten Probenstelle (8) aus dem ersten Blickfeldbereich (5a) liefert, wobei der zweite Pixel (2b) ausgelesen wird und zweite Lesedaten (L2) der erwärmten Probenstelle (8) aus dem zweiten Blickfeldbereich (5b) liefert, wobei der zweite Pixel (2b) nach dem ersten Pixel (2b) ausgelesen wird, wobei die ersten Lesedaten (L1) und die zweiten Lesedaten (L2) aufgrund der relativen Bewegung zwischen der erwärmten Probenstelle (8) und dem Blickfeld (5) unterschiedlichen relativen Positionen (x1, x2) der erwärmten Probenstelle (8) relativ zum Blickfeld (5) zugeordnet sind und unterschiedlichen Zeitpunkten (t1, t2) des Temperaturverlaufs T(t) der erwärmten Probenstelle (8) zugeordnet werden, so dass die ersten Lesedaten (L1) Daten für eine erste Temperatur T(t1) und die zweiten Lesedaten (L2) Daten für eine zweite Temperatur T(t2) des Temperaturverlaufs T(t) der erwärmten Probenstelle (8) liefern.
